(19) Europäisches Patentamt
European Patent Office
Office européen des brevets

(11) EP 1 701 554 B1

(12) **EUROPEAN PATENT SPECIFICATION**

(45) Date of publication and mention of the grant of the patent:
**19.06.2013 Bulletin 2013/25**

(21) Application number: **04807669.9**

(22) Date of filing: **24.12.2004**

(51) Int Cl.:
***H04N 9/64*** *(2006.01)* *G09G 5/02* *(2006.01)*

(86) International application number:
**PCT/JP2004/019312**

(87) International publication number:
**WO 2005/062628 (07.07.2005 Gazette 2005/27)**

# (54) Color display system with accurate conversion between the RGB and XYZ colorimetric systems

Farbanzeigesystem mit akkurater Umwandlung zwischen den RGB und XYZ kolorimetrischen Systemen

Système d’affichage en couleur avec conversion précise entre les systèmes colorimétriques RGB et XYZ

(84) Designated Contracting States:
**BE NL**

(30) Priority: **24.12.2003 JP 2003427660**

(43) Date of publication of application:
**13.09.2006 Bulletin 2006/37**

(73) Proprietor: **National University Corporation Shizuoka University**
**Shizuoka-shi, Shizuoka 422-8529 (JP)**

(72) Inventors:
- **SHIMODAIRA, Yoshifumi**
  **Hamakita-shi,**
  **Shizuoka 4340042 (JP)**
- **SHIMAZU, Takamori**
  **Hamamatsu-shi,**
  **Shizuoka 4350028 (JP)**

(74) Representative: **Cooper, John**
**Murgitroyd & Company**
**165-169 Scotland Street**
**Glasgow G5 8PL (GB)**

(56) References cited:
**EP-A2- 1 271 465** **JP-A- 9 098 444**
**JP-A- 9 200 790** **JP-A- 2003 323 610**

- **YOSHIFUMI SHIMODAIRA ET AL: "New Imaging and Display System for Wide Gamut Color Reproduction" INDUSTRY APPLICATIONS CONFERENCE, 2007. 42ND IAS ANNUAL MEETING. CONFE RENCE RECORD OF THE 2007 IEEE, IEEE, PI, 1 September 2007 (2007-09-01), pages 1153-1157, XP031146072 ISBN: 978-1-4244-1259-4**
- **DAWN WALLNER: ’Building ICC Profiles - the Mechanics and Engineering’, [Online] 01 April 2000, XP055032635 International Color Consortium Retrieved from the Internet: <URL: http://www.color.org/icc-book1.pdf> [retrieved on 2012-07-12]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 701 554 B1

## Description

### Technical Field

The present invention relates to a display system of colors in the color gamut of a display device, and particularly to a high accuracy display system thereof.

### Background Art

An RGB colorimetric system and an XYZ colorimetric system are well known as color systems. With the RGB colorimetric system, actually existing monochromatic light is used as primary stimuli to define existing colors by combining their primary stimulus values. Although capable of expressing colors in association with physical coloring materials, this colorimetric system has shortcomings such as presence of negative color-matching functions. Negative color-matching functions are inconvenient when designing actual optical equipments in that g=G/(R+G+B) on the chromaticity coordinate is broad but r=R/(R+G+B) is narrow.

Therefore, the XYZ colorimetric system which is free from the shortcomings of the RGB colorimetric system and is convenient for calculating color specification is defined as CIE-1931. Assuming that there is a linear relationship between the RGB colorimetric system and the XYZ colorimetric system, there is a relationship therebetween, which can be expressed by an equation (10) below.

Since it is assumed that a linear relationship exists between the RGB colorimetric system and the XYZ colorimetric system, which is apparent from the equation (10), conversion between RGB and XYZ has been performed linearly in a gradation range of 0 to 255, with the value 255 as the maximum luminance.

$$\begin{bmatrix} X \\ Y \\ Z \end{bmatrix} = \begin{bmatrix} 2.7689 & 1.7518 & 1.1302 \\ 1.0000 & 4.5907 & 0.0601 \\ 0 & 0.0565 & 5.5943 \end{bmatrix} \begin{bmatrix} R \\ G \\ B \end{bmatrix} \quad (10)$$

Building ICC Profiles - the Mechanics and Engineering by Dawn Wallner which can be found at http://www.color.org/icc-book1.pdf describes the conversion from a profile connection space into a display color space using an inverted Shaper/Matrix Model. The devices are described along with the manner of precisely setting up the device for the data that applies. RGB and XYZ settings are discussed and the conversion processes are outlined.

EP 1271465 relates to a method of calibrating, characterising and driving a color flat panel display, which has channel adjustment for both gain and offset and an adjustment to provide a white point for the display The method comprises displaying a first and second target using different level code values for each channel of the display and sensing the luminance level and/or chromaticities of the target, The luminance level and the chromaticities are adjusted such that a third target is displayed using maximum code values for each channel of the display. The luminance level and chromaticities of the third target is displayed and adjusted until the luminance level is at a and the chromaticities match the first set of predetermined chromaticities.

### Disclosure of the Invention

Problems to be Solved by the Invention

The conventional method described above has shortcomings in that, when an angle (ratio of tristimulus value) of each of three primary colors varies due to non-linearity of half-tone reproduction characteristic, temperature variation, aging or the like, conversion between the RGB and XYZ colorimetric systems can not be performed accurately. Thus, it is necessary to always keep the chromaticity (C) for each of the three primary colors (RGB) of a display accurately constant in order to make the conventional method effective. In reality, however, this is impossible.

Therefore it is an object of the present invention to provide a processing system and an apparatus for performing a correct conversion between the RGB and XYZ colorimetric systems.

Means for Solving the Problems

The invention is defined by the independent claim. The dependent claim defines an advantageous embodiment.

Effects of the Invention

When converting a value of the XYZ display system into the RGB display system, in order to eliminate the effect of non-linearity or the like between the excitation voltage (excitation current) being input to the display device and the intensity of the display color, the gradation value of the excitation voltage (excitation current), starting from ($2^n$ - 1), is varied by calculation such that the error is reduced, and the optimal gradation value for performing the conversion is determined by finding the minimum error, which is advantageous in that the optimal RGB value can be provided to the display device.

With the above-mentioned advantage, even if the chromaticity (ratio of tristimulus values) of the primary colors varies due to display luminance variation, aging, temperature variation or the like, because the values subject to variation are stored as data the present invention can reproduce the display color accurately depending on the data. Additionally, according to the present invention, there is an advantage that the display color can be correctly reproduced in a very simple manner because no strict calibration is required for the display device. However, a suitable accuracy is necessary for the measuring device of tristimulus values. Furthermore, there is an advantage that the system of the present invention can be applied to any type of display devices, including LCD, CRT, PDP or the like, regardless of its constitutive principle, as long as additive color mixture is effective.

**Brief Description of the Drawings**

Fig. 1 is an exemplary measurement showing, for tristimulus values of R, G and B, respectively, the relationship between an input value of an RGB signal into a display device and a Y stimulus value in an XYZ colorimetric system (denoted as RLinear, Glinear and BLinear).

Fig. 2 is an illustrative drawing showing the relationship between RGB and XYZ on both logarithmic axes, which is normalized by setting the maximum value of the stimulus values X, Y and Z to be 1.

Fig. 3 is a flow chart of the system which performs a high-fidelity color reproduction of the display color.

Fig. 4 is a schematic diagram showing a block structure of the display device implementing a high-fidelity color reproduction system thereon.

(Explanations of numerals)

1 correction device
2 display device

**Best Modes for Carrying Out the Invention**

In the following, an embodiment of the present invention will be described in detail referring to the drawings. Fig. 1 is a normalized exemplary measurement showing, for the tristimulus values of R, G and B, respectively, the relationship between the input value of the RGB signal into the display device and the stimulus value in the XYZ colorimetric system. In Fig. 1, Fig. 1(a) is for R (red), Fig. 1(b) is for G (green), and Fig. 1(c) is for B (blue). On the horizontal axis, an n-bit digital excitation voltage (or excitation current) varies stepwise from 0 to ($2^n$ - 1) one at a time. Fig.2 is an example of an illustrative drawing showing the normalized relationship between RGB and XYZ, with the minimum and the maximum gradation values of the input excitation voltage set to 0 and ($2^n$ - 1), respectively and the maximum of the stimulus values X, Y and Z set to 1.

Although each of the stimulus values Xi, Yi and Zi, (i=R or G or B) varies on the vertical axis in relationship to the digital excitation value on the horizontal axis, it does not necessarily correspond linearly.

The following Table 1 is an example showing the relationship among the values of the input excitation voltage, X, Y and Z stimulus values, and the luminance.

[Table 1]

| gradation | luminance | X | Y | Z |
|---|---|---|---|---|
| 000 | 0.000000 | 0.000000 | 0.000000 | 0.000000 |
| 001 | 0.014722 | 0.008921 | 0.014722 | 0.000000 |

(continued)

| gradation | luminance | X | Y | Z |
|---|---|---|---|---|
| | | | | |
| 100 | 12.2863 | 5.84270 | 12.2863 | 2.02381 |
| | | | | |
| 254 | 91.55087 | 43.50986 | 91.55087 | 14.8336 |
| 255 | 92.5194 | 43.9850 | 92.5194 | 14.9770 |

Here, it is assumed that the relationship of the stimulus value to excitation values such as excitation voltage or excitation current is linear. Then, a color (C) can be generally expressed by the following equation (1), using the tristimulus values of the three primary colors R (red), G (green) and B (blue) when the color is displayed.

$$X_C = X_R + X_G + X_B$$

$$Y_C = Y_R + Y_G + Y_B \quad (1)$$

$$Z_C = Z_R + Z_G + Z_B$$

Here, $X_R$, $X_G$ and $X_B$ are respectively the R, G and B components of the stimulus value $X_C$; $Y_R$, $Y_G$ and $Y_B$ are respectively the R, G and B components of the stimulus value $Y_C$; and $Z_R$, $Z_G$ and $Z_B$ are respectively the R, G and B components of the stimulus value $Z_C$.

In many actual display devices, chromaticity of primary colors varies depending on the gradation of the excitation value such as excitation voltage or excitation current, with the gradation of the excitation value varying from zero to ($2^n$ - 1) digitally, according to the following relation:

$$\sum_{i=1}^{n} a_i \, 2^{i-1} - 1$$

(where $a_i$ = 0 or 1 : i=1,2...n)

If $a_1 = a_2 = a_3 = ... = a_{n-1} = 1$, then ($\Sigma a_i 2^{i-1}$ - 1) = $2^n$ - 1. Despite such variation, it is possible to set the operating point so that the chromaticity (C) of the primary colors does not remarkably deviate from the linear relation. This is because the coefficient $a_i$ in the above expression ($\Sigma a_i 2^{i-1}$ - 1) has an upper limit and a lower limit since the relationship between the excitation voltage (or current) and luminance is continuous, which allows the variation of $a_i$ to be suffciently small if the setting system of the operating point is selected appropriately. Assuming such a condition, the following equation (2) holds for each of R (red), G (green) and B (blue), using the tristimulus values (XYZ) when the excitation value is ($2^n$ - 1).

In equations (2) to (4) below, the term (2n - 1) is used to mean ($2^n$ - 1).

$$X_C = X_{R(2n-1)}R + X_{G(2n-1)}G + X_{B(2n-1)}B$$

$$Y_C = Y_{R(2n-1)}R + Y_{G(2n-1)}G + Y_{B(2n-1)}B \quad (2)$$

$$Z_C = Z_{R(2n-1)}R + Z_{G(2n-1)}G + Z_{B(2n-1)}B$$

Here, R, G and B expresses the ratio of the luminance of the primary colors when color C is displayed, each of which taking an analog value between 0 and 1. These will be referred to as linear values hereinafter.

A matrix form of equation (2) is given as equation (3) below.

$$\begin{bmatrix} X_C \\ Y_C \\ Z_C \end{bmatrix} = \begin{bmatrix} X_{R(2n-1)} & X_{G(2n-1)} & X_{B(2n-1)} \\ Y_{R(2n-1)} & Y_{G(2n-1)} & Y_{B(2n-1)} \\ Z_{R(2n-1)} & Z_{G(2n-1)} & Z_{B(2n-1)} \end{bmatrix} \begin{bmatrix} R \\ G \\ B \end{bmatrix} \quad (3)$$

Alternatively, the following equation (4) is determined using an inverse matrix.

$$\begin{bmatrix} R \\ G \\ B \end{bmatrix} = \begin{bmatrix} X_{R(2n-1)} & X_{G(2n-1)} & X_{B(2n-1)} \\ Y_{R(2n-1)} & Y_{G(2n-1)} & Y_{B(2n-1)} \\ Z_{R(2n-1)} & Z_{G(2n-1)} & Z_{B(2n-1)} \end{bmatrix}^{-1} \begin{bmatrix} X_C \\ Y_C \\ Z_C \end{bmatrix} \quad (4)$$

With a general display device, since the chromaticity of the half tone gradation reproduction characteristic for each of the primary colors red, green and blue varies, the ratio of tristimulus values between gradation is $Xi:Yi:Zi \neq Xj:Yj:Zj$, the accurate gradation value of the excitation value for color C cannot be determined by the above-mentioned simple matrix calculation.

Using the linear R, G and B values determined for color C according to the description for equations (1) and (2), and also using the half tone reproduction characteristic (Fig. 1) initially measured, gradation of the excitation values for R (red), G (green) and B (blue) are determined, respectively. Since the values are intrinsic to the display device, they are referred to as the device RGB and denoted as Rd, Gd and Bd in expression (5).

$$\begin{aligned} Rd &\leftarrow R_{linear} \\ Gd &\leftarrow G_{linear} \qquad (5) \\ Bd &\leftarrow B_{linear} \end{aligned}$$

Three sets of tristimulus values, (Xrd, Yrd, Zrd), (Xgd, Ygd, Zgd) and (Xbd, Ybd, Zbd), for these device RGBs are determined from the measurement result.

If the display device is ideally linear and the ratio of values of the tristimulus values does not vary even if the gradation value of the excitation differs, the tristimulus value of the color determined by adding these three tristimulus values should have a ratio which coincides with that of the tristimulus values of color C presented in equation (1). However, since the chromaticity actually varies for different gradation values of excitation, the color C determined by the sum of the tristimulus values of respective gradation values which are thus determined does not coincide with the actual color C, and the tristimulus value in this case does not coincide with what has been determined by calculation.

Here, the tristimulus values of R (red), G (green) and B (blue) may be multiplied by a, b and c, respectively, to approximately coincide with the tristimulus values of any actually measured color C, where a=1.10, b= 0.90 and c=0.95, for example. That is, equation (6) is derived.

$$\begin{aligned} X_c &\fallingdotseq aXrd + bXgd + cXbd \\ Y_c &\fallingdotseq aYrd + bYgd + cYbd \qquad (6) \end{aligned}$$

$$Z_c \fallingdotseq aZrd + bZgd + cZbd$$

Equation (6) can be expressed in matrix form as in equations (7) and (8) below.

$$\begin{bmatrix} X_C \\ Y_C \\ Z_C \end{bmatrix} = \begin{bmatrix} Xrd & Xgd & Xbd \\ Yrd & Ygd & Ybd \\ Zrd & Zgd & Zbd \end{bmatrix} \begin{bmatrix} a \\ b \\ c \end{bmatrix} \qquad (7)$$

$$\begin{bmatrix} a \\ b \\ c \end{bmatrix} = \begin{bmatrix} Xrd & Xgd & Xbd \\ Yrd & Ygd & Ybd \\ Zrd & Zgd & Zbd \end{bmatrix}^{-1} \begin{bmatrix} X_C \\ Y_C \\ Z_C \end{bmatrix} \qquad (8)$$

Equation (7) provides a relational expression for determining $X_C$, $Y_C$ and $Z_C$ using the tristimulus values of the display device, which are closer to the tristimulus values for the three primary colors when displaying color C. Since the coefficients a, b and c express the luminance ratio of the primary colors R, G and B at that time, they can be regarded as the corrected linear (Ra, Gb, Bc). As with the case when a linear function holds, gradation values that the display device may take for respective colors are determined from the half tone reproduction characteristic, according to the relationship of the following equation (9).

$$Rd' \Leftrightarrow R_{a\text{-linear}}$$

$$Gd' \Leftrightarrow G_{b\text{-linear}} \qquad (9)$$

$$Bd' \Leftrightarrow B_{c\text{-linear}}$$

Tristimulus values thus determined for each of the three primary colors when displaying color C are (Xrd', Yrd', Zrd'), (Xgd', Ygd', Zgd') and (Xbd', Ybd', Zbd').

The sum of the tristimulus values thus determined are closer to the tristimulus values of the actual color C than the sum of the tristimulus values determined by assuming a linear relationship. If, however, the difference with the tristimulus values of the actually measured color C is still large, the above-mentioned operation will be repeatedly performed until the values of the both come closer. How close the values of the both have come can be determined by examining the values of the coefficients a, b and c. The ideal value of the convergence condition is such that a, b and c are all 1. Therefore, the chromaticity value of a desired precision can be determined by repeatedly performing the operation until a, b and c respectively result in predefined values which are close to 1.

Fig. 3 is a diagram showing a flow chart of the system which performs a high-fidelity color reproduction of the display color according to the above-mentioned system. First, a color $C(X_C, Y_C, Z_C)$ signal is converted into the RGB display system using the X, Y and Z of each of the three primary colors at the maximum gradation value ($2^n - 1$) of the display device to determine the value in the RGB display system at the time. Then, the values of corresponding (Xrd, Yrd, Zrd), (Xgd, Ygd, Zgd) and (Xbd, Ybd, Zbd) are determined, which in turn are used to calculate $X_C$, $Y_C$ and $Z_C$ from equation (6). Using the determined $X_C$, $Y_C$ and $Z_C$ again, the above-mentioned calculation is repeated until a, b and c result in predefined values which are close to 1.

Fig. 4 is a schematic diagram of an image display showing the block structure of the display device, which receives an image signal having display values $X_C$, $Y_C$ and $Z_C$, and after passing the signal through the system comprising the above-mentioned high-fidelity color reproduction function, displays the image signal having display values $R_d$, $G_d$ and $B_d$. In FIG 4, numeral 1 denotes a correction device including a system comprising a high-fidelity color reproduction function, and numeral 2 denotes a display device. The correction device 1 includes a system comprising a high-fidelity color reproduction function which, when an image signal of the XYZ display system is input to the correction device 1, accurately converts the input gradation values of the XYZ colorimetric system to the RGB colorimetric system, and outputs the image signal of the RGB colorimetric system. The display device 2 receives the image signal of the RGB colorimetric system which is output from the correction device 1 and displays the image.

As mentioned above, since the color display system of the present invention can be adapted to display devices of any form, it is suitable for applying not only to CRT's but also to LCD's and PDP's.

**Industrial Applicability**

A color display system for a display device according to the present invention can be used with various types of display devices. Therefore it can be widely used in a field where high-fidelity color reproduction is required for each of various types of display devices.

**Claims**

**1.** A color display system comprising:

a correction device (1) for receiving an input image signal in an XYZ colorimetric system that includes input XYZ tristimulus values, for accurately converting, the input XYZ tristimulus values into device RGB tristimulus values and for outputting an output image signal in a RGB colorimetric system that includes said device RGB tristimulus values, so that distortion error due to nonlinearity or the like of RGB primaries is minimized; and
a display device (2) having RGB primaries, each of which has a chromaticity that varies based on a digital excitation level, the display device for displaying said output image signal;
wherein the correction device comprises:

a means for converting input XYZ tristimulus values $X_C$, $Y_C$, $Z_C$, representing a color C in said input image signal, each of which XYZ tristimulus values may take any integer stimulus value between 0 and $\{2^n - 1\}$ where n is a number of bits of the data representing the digital excitation level, into linear RGB tristimulus values using an XYZ tristimulus value corresponding to the respective maximum stimulus value of each of the RGB primaries
a calculation means for:

(a) determining device RGB tristimulus values ($R_d$, $G_d$ and $B_d$), intrinsic to the particular display device of the system, that correspond to the linear RGB tristimulus values at an operating point d of the display device, from measurement values of a previously measured half tone reproduction characteristic of the display device,
(b) determining three sets of tristimulus values $X_{rd}$, $Y_{rd}$, $Z_{rd}$, $X_{gd}$, $Y_{gd}$, $Z_{gd}$ $X_{bd}$, $Y_{bd}$, $Z_{bd}$ for each of the three RGB primaries when displaying color C from said measurement values, and
(c) calculating coefficients a, b and c from

$$X_C = aX_{rd} + bX_{gd} + cX_{bd}$$

$$Y_C = aY_{rd} + bY_{gd} + cY_{bd}$$

$$Z_C = aZ_{rd} + bZ_{gd} + cZ_{bd}$$

a determination means for determining whether or not the coefficients a, b and c found in the calculation means are all within a predefined tolerance range such that the coefficients a, b and c all have values which are close to 1 and, when within the tolerance range, for outputting the device RGB tristimulus values ($R_d$, $G_d$ and $B_d$) as the correct values corresponding to the input image signal; and
a feedback means for feeding back, when determined to be out of the tolerance range by the determination means, the coefficients a, b and c to the calculation means and causing the calculation means to perform the calculation again using the coefficients a, b and c as corrected linear RGB tristimulus values in place of the previous linear RGB tristimulus values of determination step (a).

**2.** The color display system for a display device according to claim 1, wherein the display device is a CRT, an LCD, or a PDP.

**Patentansprüche**

**1.** Ein Farbanzeigesystem, das Folgendes beinhaltet:

eine Korrekturvorrichtung (1) zum Empfangen eines Eingangsbildsignals in einem XYZkolorimetrischen System, das Eingangs-XYZ-Tristimuluswerte umfasst, zum akkuraten Umwandeln der Eingangs-XYZ-Tristimuluswerte in Vorrichtungs-RGB-Tristimuluswerte und zum Ausgeben eines Ausgangsbildsignals in einem RGB-kolorimetrischen System, das die Vorrichtungs-RGB-Tristimuluswerte umfasst, so dass ein Verfälschungsfehler aufgrund einer Nichtlinearität oder dergleichen von RGB-Primärfarben minimiert wird; und
eine Anzeigevorrichtung (2) mit RGB-Primärfarben, von denen jede eine Farbart aufweist, die auf der Basis eines digitalen Anregungsniveaus variiert, wobei die Anzeigevorrichtung zum Anzeigen des Ausgangsbildsignals dient;
wobei die Korrekturvorrichtung Folgendes beinhaltet:

ein Mittel zum Umwandeln der Eingangs-XYZ-Tristimuluswerte $X_C$, $Y_C$, $Z_C$, die eine Farbe C in dem Eingangsbildsignal darstellen, wobei jeder der XYZ-Tristimuluswerte einen beliebigen ganzzahligen Stimuluswert zwischen 0 und $\{2^n - 1\}$ annehmen kann, wobei n eine Anzahl Bit der Daten ist, die das digitale Anregungsniveau darstellt, zu linearen RGB-Tristimuluswerten unter Verwendung eines XYZ-Tristimuluswertes, der dem jeweiligen maximalen Stimuluswert jeder der RGB-Primärfarben entspricht, ein Berechnungsmittel zum:

(a) Bestimmen von für die bestimmte Anzeigevorrichtung des Systems intrinsischen Vorrichtungs-RGB-Tristimuluswerten ($R_d$, $G_d$ und $B_d$), die den linearen RGB-Tristimuluswerten an einem Betriebspunkt d der Anzeigevorrichtung entsprechen, aus Messwerten eines zuvor gemessenen Halbton-Reproduktionsmerkmals der Anzeigevorrichtung,
(b) Bestimmen von drei Sätzen Tristimuluswerten $X_{rd}$, $Y_{rd}$, $Z_{rd}$, $X_{gd}$, $Y_{gd}$, $Z_{gd}$, $X_{bd}$, $Y_{bd}$, $Z_{bd}$ für jede der drei RGB-Primärfarben beim Anzeigen der Farbe C aus den Messwerten, und
(c) Berechnen der Koeffizienten a, b und c aus

$$X_C = aX_{rd} + bX_{gd} + cX_{bd}$$

$$Y_C = aY_{rd} + bY_{gd} + cY_{bd}$$

$$Z_C = aZ_{rd} + bZ_{gd} + cZ_{bd}$$

ein Bestimmungsmittel zum Bestimmen, ob die in dem Berechnungsmittel gefundenen Koeffizienten a, b und c alle innerhalb eines vordefinierten Toleranzbereichs liegen, so dass die Koeffizienten a, b und c alle Werte aufweisen, die nahe bei 1 sind, oder nicht, und, wenn innerhalb des Toleranzbereichs, zum Ausgeben der Vorrichtungs-RGB-Tristimuluswerte ($R_d$, $G_d$ und $B_d$) als die korrekten Werte, die dem Eingangsbildsignal entsprechen; und
ein Rückkopplungsmittel zum Rückkoppeln der Koeffizienten a, b und c, wenn von dem Bestimmungsmittel als außerhalb des Toleranzbereichs liegend bestimmt, an das Berechnungsmittel und Veranlassen, dass das Berechnungsmittel die Berechnung unter Verwendung der Koeffizienten a, b und c als korrigierter linearer RGB-Tristimuluswerte anstelle der vorherigen linearen RGB-Tristimuluswerte des Bestimmungsschritts (a) erneut durchführt.

**2.** Farbanzeigesystem für eine Anzeigevorrichtung gemäß Anspruch 1, wobei die Anzeigevorrichtung ein CRT, ein LCD oder ein PDP ist.

## Revendications

**1.** Un système d'affichage couleur comprenant :

un dispositif de correction (1) pour recevoir un signal d'image d'entrée dans un système colorimétrique XYZ qui inclut des valeurs de tristimulus XYZ d'entrée, pour convertir de façon précise, les valeurs de tristimulus XYZ d'entrée en valeurs de tristimulus RVB de dispositif et pour sortir un signal d'image de sortie dans un système colorimétrique RVB qui inclut lesdites valeurs de tristimulus RVB de dispositif, de sorte que l'erreur de distorsion due à la non linéarité ou analogue des primaires RVB soit minimisée ; et
un dispositif d'affichage (2) ayant des primaires RVB, présentant chacune une chromaticité qui varie sur la base d'un niveau d'excitation numérique, le dispositif d'affichage étant destiné à afficher ledit signal d'image de sortie ; dans lequel le dispositif de correction comprend :

un moyen pour convertir des valeurs de tristimulus XYZ d'entrée $X_C$, $Y_C$, $Z_C$, représentant une couleur C dans ledit signal d'image d'entrée, chacune des valeurs de tristimulus XYZ pouvant prendre n'importe quelle valeur de stimulus entière entre 0 et $\{2^n - 1\}$ dans laquelle n est un nombre de bits des données représentant le niveau d'excitation numérique,
en valeurs de tristimulus RVB linéaires en utilisant une valeur de tristimulus XYZ correspondant à la valeur de stimulus maximale respective de chacune des primaires RVB
un moyen de calcul pour :

(a) déterminer des valeurs de tristimulus RVB de dispositif ($R_d$, $G_d$ et $B_d$), intrinsèques au dispositif d'affichage particulier du système, qui correspondent aux valeurs de tristimulus RVB linéaires au niveau d'un point opérationnel d du dispositif d'affichage, à partir des valeurs de mesure d'une caractéristique de reproduction en demi-teinte mesurée précédemment du dispositif d'affichage,
(b) déterminer trois ensembles de valeurs de tristimulus $X_{rd}$, $Y_{rd}$, $Z_{rd}$, $X_{gd}$, $Y_{gd}$, $Z_{gd}$, $X_{bd}$, $Y_{bd}$, $Z_{bd}$ pour chacune des trois primaires RVB au moment d'afficher la couleur C à partir desdites valeurs de mesure, et
(c) calculer les coefficients a, b et c à partir de

$$X_c = aX_{rd} + bX_{gd} + CX_{bd}$$

$$Y_c = aY_{rd} + bY_{gd} + CY_{bd}$$

$$Z_c = aZ_{rd} + bZ_{gd} + CZ_{bd}$$

un moyen de détermination pour déterminer si oui ou non les coefficients a, b et c trouvés dans le moyen de calcul sont tous à l'intérieur d'une plage de tolérance prédéfinie de telle sorte que les coefficients a, b et c aient tous des valeurs qui soient proches de 1 et, lorsqu'à l'intérieur de la plage de tolérance, pour sortir les valeurs de tristimulus RVB de dispositif ($R_d$, $G_d$ et $B_d$) comme valeurs justes correspondant au signal d'image d'entrée ; et
un moyen de retour pour donner en retour, lorsque les moyens de détermination déterminent qu'ils sont en dehors de la plage de tolérance, les coefficients a, b et c au moyen de calcul et pour amener le moyen de calcul à effectuer de nouveau le calcul à l'aide des coefficients a, b et c en tant que valeurs de tristimulus RVB linéaires corrigées à la place des valeurs de tristimulus RVB linéaires précédentes de l'étape de détermination (a).

2. Le système d'affichage couleur pour un dispositif d'affichage selon la revendication 1, dans lequel le dispositif d'affichage est cathodique, à cristaux liquides, ou plasma.

Fig.1

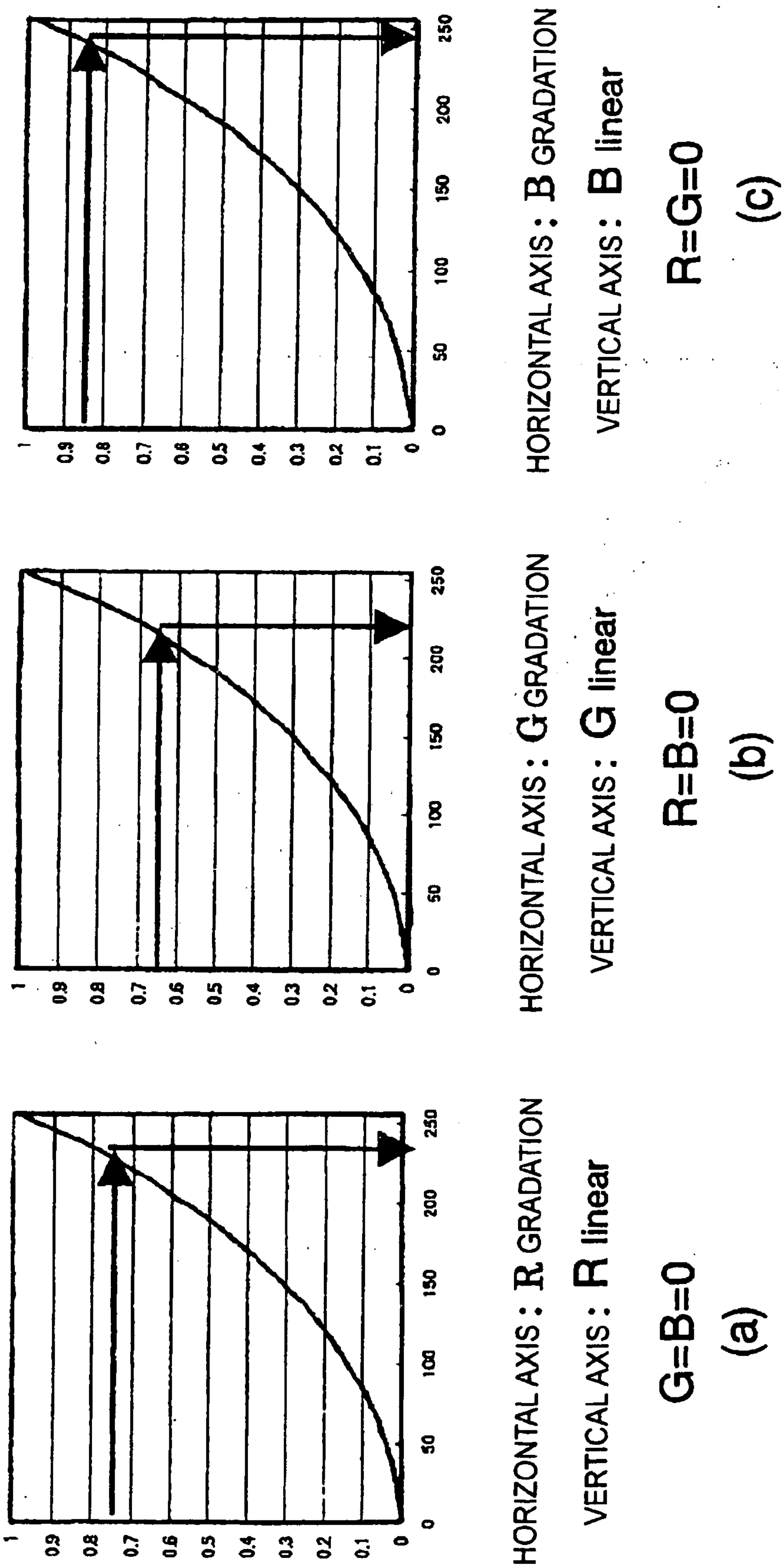
HORIZONTAL AXIS : R GRADATION
VERTICAL AXIS : R linear
G=B=0
(a)
HORIZONTAL AXIS : G GRADATION
VERTICAL AXIS : G linear
R=B=0
(b)
HORIZONTAL AXIS : B GRADATION
VERTICAL AXIS : B linear
R=G=0
(c)
0
0.1
0.2
0.3
0.4
0.5
0.6
0.7
0.8
0.9
1
0
50
100
150
200
250

*Fig.2*

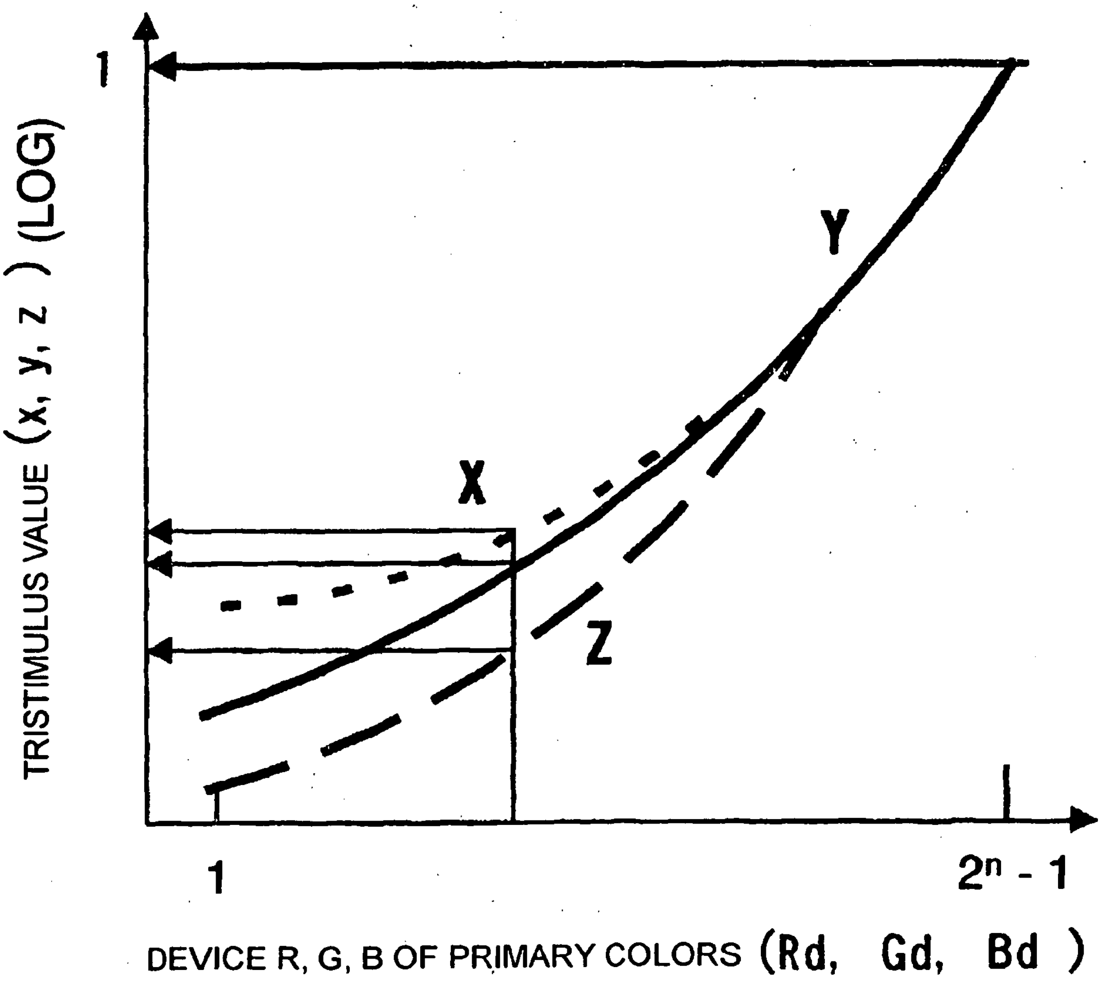
1
TRISTIMULUS VALUE (x, y, z) (LOG)
X
Y
Z
1
2ⁿ - 1
DEVICE R, G, B OF PRIMARY COLORS (Rd, Gd, Bd)

Fig.3

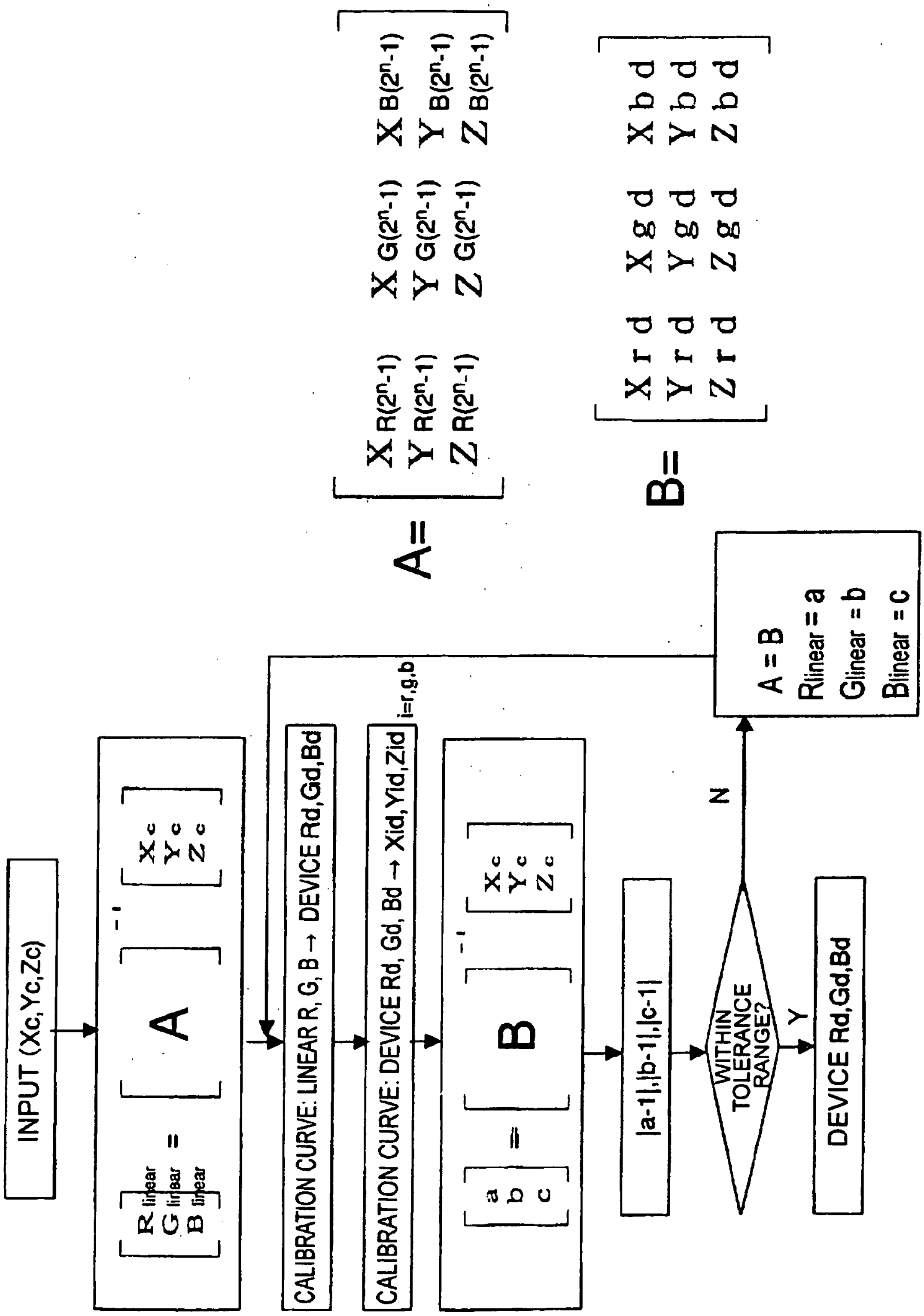
INPUT (Xc,Yc,Zc)
R linear
G linear
B linear
=
A
-1
Xc
Yc
Zc
CALIBRATION CURVE: LINEAR R, G, B → DEVICE Rd,Gd,Bd
CALIBRATION CURVE: DEVICE Rd, Gd, Bd → Xid,Yid,Zid
i=r,g,b
a
b
c
=
B
-1
Xc
Yc
Zc
|a-1|,|b-1|,|c-1|
WITHIN TOLERANCE RANGE?
Y
N
DEVICE Rd,Gd,Bd
A = B
Rlinear = a
Glinear = b
Blinear = c
A=
X R(2n-1) X G(2n-1) X B(2n-1)
Y R(2n-1) Y G(2n-1) Y B(2n-1)
Z R(2n-1) Z G(2n-1) Z B(2n-1)
B=
X r d X g d X b d
Y r d Y g d Y b d
Z r d Z g d Z b d

Fig.4

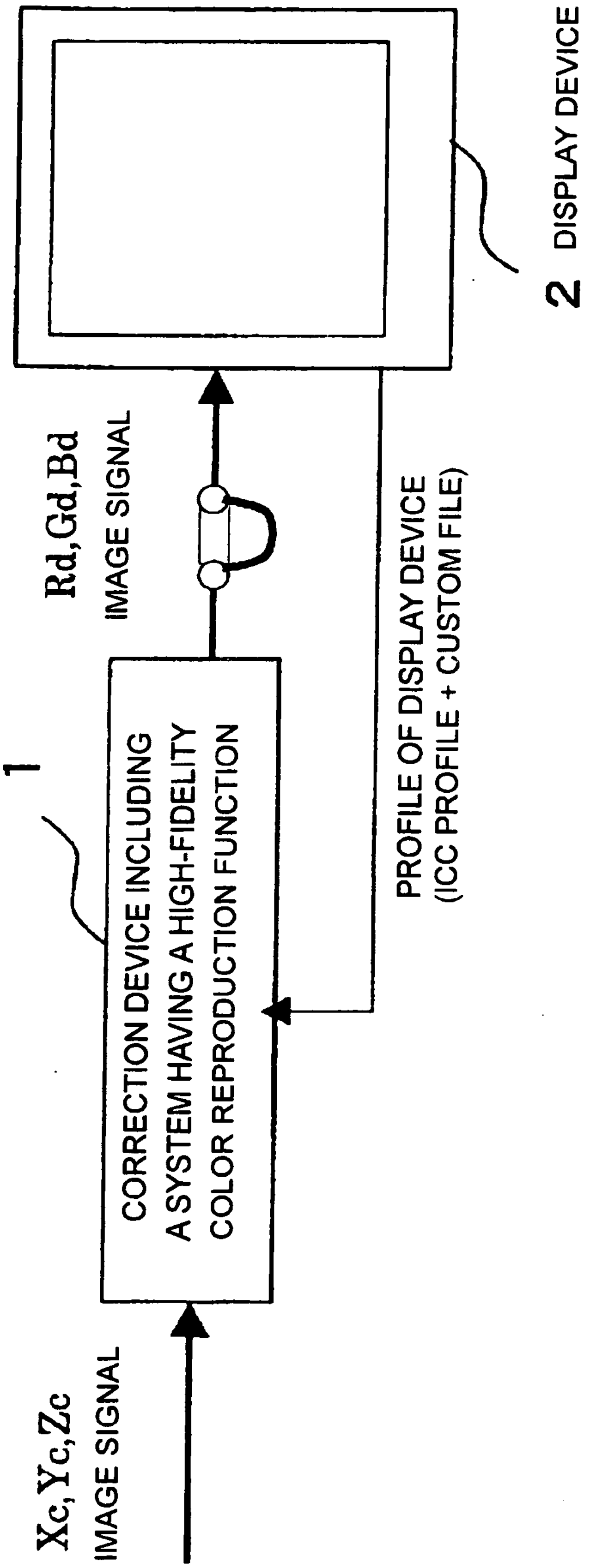
2 DISPLAY DEVICE
Rd,Gd,Bd
IMAGE SIGNAL
PROFILE OF DISPLAY DEVICE
(ICC PROFILE + CUSTOM FILE)
1
CORRECTION DEVICE INCLUDING
A SYSTEM HAVING A HIGH-FIDELITY
COLOR REPRODUCTION FUNCTION
Xc,Yc,Zc
IMAGE SIGNAL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1271465 A


### Non-patent literature cited in the description


- **DAWN WALLNER.** *Building ICC Profiles - the Mechanics and Engineering, http://www.color.org/icc-book1.pdf*